(19) Europäisches Patentamt
European Patent Office
Office européen des brevets

(11) **EP 2 432 269 B1**

## (12) EUROPEAN PATENT SPECIFICATION

(45) Date of publication and mention
of the grant of the patent:
**23.07.2014 Bulletin 2014/30**

(51) Int Cl.:
***H04W 24/02*** *(2009.01)* ***H04L 12/24*** *(2006.01)*

(21) Application number: **10177396.8**

(22) Date of filing: **17.09.2010**

(54) **Method and system for optimum configuration of a mesh network considering traffic characteristics**

Verfahren und System zur optimalen Konfiguration eines Maschennetzwerks unter Einbeziehung der Verkehrseigenschaften

Procédé et système pour la configuration optimale d'un réseau maillé prenant en compte les caractéristiques du trafic

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.03.2012 Bulletin 2012/12**

(73) Proprietor: **Deutsche Telekom AG**
**53113 Bonn (DE)**

(72) Inventor: **von Hugo, Dirk**
**64291, Darmstadt (DE)**

(74) Representative: **2K Patentanwälte Blasberg Kewitz & Reichel**
**Partnerschaft**
**Schumannstrasse 27**
**60325 Frankfurt am Main (DE)**

(56) References cited:
**US-A1- 2008 181 124 US-A1- 2008 225 717**

## Description

### Field of the Invention

Wireless mesh networks (WMNs) are considered to be a promising technology for cost-efficient establishment of Internet access in both sparse rural areas as well as in densely populated urban areas. In a WMN mesh routers relay traffic on behalf of clients or other routers and by this form a wireless multi-hop network. A challenge to WMNs is the congestion of links between mesh routers and optimization of the network configuration with respect to offering maximum data rate and reliability at low cost.

The present invention describes a method and network components which allow to determine traffic characteristic parameters and use this information to find and perform the optimum configuration.

WMNs especially have the capability to provide:

- Extension of network coverage without increasing transmit power or receive sensitivity
- Enhanced reliability via route redundancy
- Easier network configuration
- Better device battery life due to fewer retransmissions

An overview on current status of technology is given in [1].

A wireless mesh network is a network made up of three types of nodes: Those providing access to end users (Access Points, APs), those interconnecting other nodes and forwarding traffic between them (Mesh Points, MPs) and those providing access to a global external network e.g. as gateways to the internet (GateWays, GWs). The network may employ different connection arrangements, either full mesh, partial mesh, or tree topology. In the full mesh topology, each node is connected directly to each of the others. In the partial mesh topology, nodes are connected only to some other nodes (e.g. the next ones or those with which they exchange the most data traffic). In the tree topology each node is only connected with the one next neighbour towards the GW as root and the underlying APs as leaves.

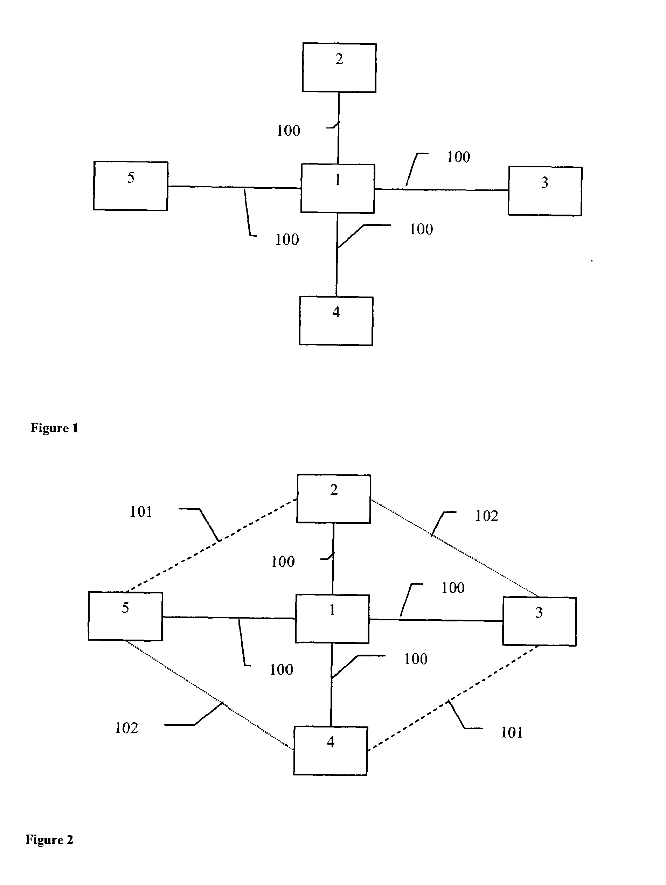

An example for a tree topology is shown in Figure 1 where a GW 1 is connected by links 100 to APs 2, 3, 4, and 5. In Figure 2 a mesh topology is shown where additionally mesh links between some APs (partial mesh with e.g. links 101 between 3 and 4 and between 2 and 5) or between more APs (higher degree mesh with links 101 and 102) are configured.

For communication systems a fully meshed topology is only relevant for small amounts of nodes (e.g. 4 APs per GW) and the traditional tree and partially meshed structure are most common.

Although being commercially available nowadays (e.g.[4]), WMNs based on standard radio technology may be suffering from congestion on links to the gateway and from adverse conditions for access at a distance of several hops from the gateway, and thus need additional support for provision of QoS and enhanced performance. Some effort is made in standardization (e.g. [5], [6], [7]), but additional research effort is currently under way (e.g. [2], [8]). Also enhanced mechanisms for Routing within WMNs have been proposed and patented (e.g. [9]).

US 2008/225717 proposes techniques for traffic engineering on wireless mesh networks for intelligent allocation of bandwidth on links within a wireless mesh network. In contrast to the specific re-configurations described therein corresponding to distinct mesh links the claimed approach is to generalize an abstractive traffic information and change the network topology in total thus simplifying the required operational effort. US 2008/181124 proposes to derive detailed network metrics and utilize these to decide on conversion of access bodes (without gateway functionality) to gateways. In contrast the claimed approach proposes no change in node characteristic but purely addition or removal of links to neighboring mesh nodes.

### Summary of Invention

The correlation between degree of meshing of network topology and impact on improved performance (e.g. in case of link outage) is well known. However, the amount of mesh links per node also increases equipment cost and network complexity and may degrade performance due to interference distortion. Therefore the amount of mesh links should be kept to a minimum. On the other hand the enhanced performance such as improvements thanks to re-routing and throughput increase by load balancing techniques have been investigated recently (e.g. [11], [12], [13], [14]). By combining these methods with the proposed mechanisms further improvement can be achieved - both in terms of cost saving (since only those interfaces are configured which are really needed to provide the optimum performance) and in overall traffic throughput of the network. Contrary to those this invention does not propose a new routing algorithm but to perform a dynamic network and equipment configuration based on simple network traffic measurements or a priori known traffic characteristics.

To measure traffic characteristics in packet communication (IP) networks based on IP flows passing through the network elements is often interesting, useful, or even required for administrative or other purposes and are state of the art (see e.g. [10]). However compared to the multitude of information parameter generally collected and analyzed the method disclosed tries to reduce the collection and storage effort to a minimum.

## Brief Description of Drawings

Figure 1 illustrates an exemplary wireless mesh network consisting of one gateway 1 and four access points 2, 3, 4, 5 and in a tree topology, i.e. each access point 2, 3, 4, 5, is only connected to gateway 1 via a mesh link 100.

Figure 2 is an example for a mesh network with a partly meshed topology. Each access point 2, 3, 4, 5 is connected to gateway 1 via mesh links 100 and may also connect to neighboring access points via mesh links 101 and/or 102.

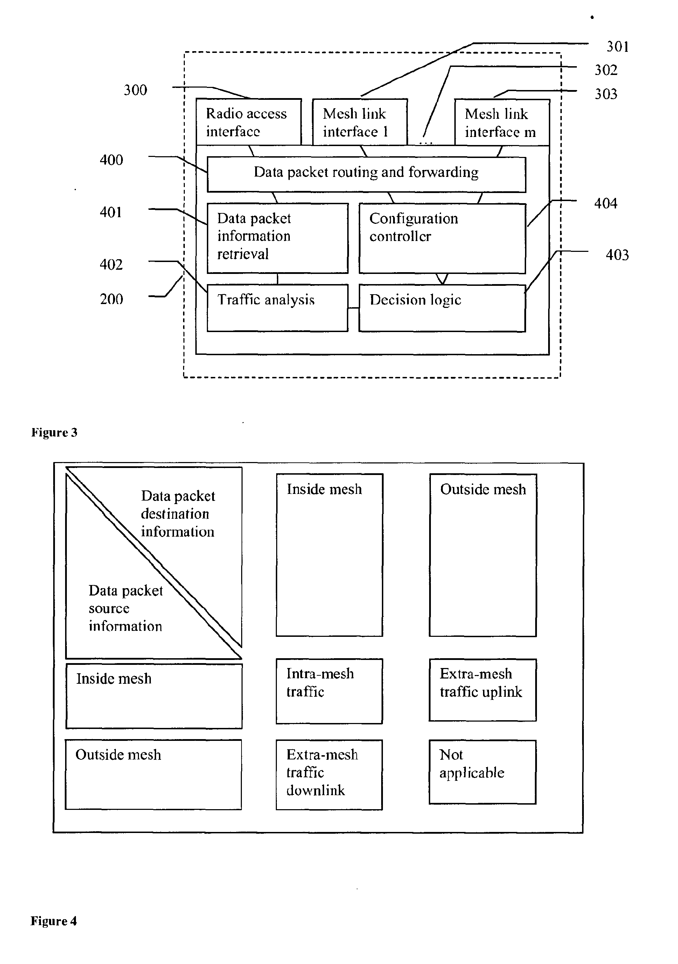

Figure 3 is a functional block diagram of a radio mesh router node 200 in accordance with some embodiments of the present invention. The radio equipment modules 300, 301, ..., 303 are controlled by functional modules 400 - 403.

Figure 4 is an example of the table structure for analysis of traffic characteristics with respect to the application of the present invention.

Figure 5 is an example of a symmetrical hexagonal scenario of n APs (mesh access points) around a central GW (gateway) with inter-AP/MP links for tree topology (solid arrows) and mesh links (dashed arrows) for a mesh topology. Some further additional mesh links (m>0) are included exemplarily. Different kinds of grey cells denote the case of n=7, 19, 31, and 37 (APs per GW).

Figure 6 shows an achievable relative throughput per AP for 3 compared topologies and gain for mesh as a function of amount of intra-mesh traffic for different parameters (6 GW links)

Figure 7 shows an achievable relative throughput per AP for 3 compared topologies and gain for mesh as a function of amount of intra-mesh traffic for different parameters (3 GW links)

Figure 8 shows an achievable relative overall throughput per AP for mesh topology as a function of amount of intra-mesh traffic for different amount of APs per GW - with and without additional m inter-MP links.

Figure 9 shows results of throughput simulation for a 7-AP mesh scenario with variable traffic demand at each AP, theoretical results for 0% variability and simulation for low and higher variability are shown.

Figure 10 shows results of outage from simulation for a 7-AP mesh and tree topology scenario at a traffic variability of 5%.

Figure 11 shows results of simulated gain of mesh/tree throughput for different amount of APs per GW and variabilities of traffic distribution in comparison to theoretical results.

## Detailed Description of Preferred Embodiments

A simple example for application of the proposed method would be the network depicted in Figure 2 where each node would be configured with 3 or 4 radio interfaces to other mesh nodes. In case a large fraction of traffic is exchanged with corresponding nodes outside the mesh network (via the gateway 1) the links 102 to other non-gateway nodes could be omitted without loosing throughput capacity on the average. Reason is that these links would only improve the performance if both other links 100 and 101 were congested or degraded.

On the other hand in case of high fraction of intra-mesh traffic, i.e. traffic to be exchanged between nodes 2 and 3, 4, 5, both links 101 and 102 to node 2 would be loaded considerably and the corresponding configuration of all 3 or 4 links per node would increase the mesh system's throughput accordingly since load on the gateway link 100 would be released correspondingly.

The invention analyses and quantifies the potential gain in meshed networks by applying methods of load balancing and traffic shaping enabled by re-attachment of end user terminals (UTs) to adjacent cells. It can be shown that by proper configuration of a mesh network the overall available transmission capacity is exploited more efficiently also in terms of QoS-dependent routing and mobility decisions.

For illustrative purpose the achievable capacity improvements thanks to combined access/mesh load balancing has been calculated analytically as a function of amount $n$ of mesh access points (APs) per gateway (GW), the degree of asymmetry between uplink and downlink traffic, and the ratio of traffic within the mesh to total traffic. A simulation considering non-homogeneously distributed traffic sources and load shows the advantage of the mesh topology in case of heavily loaded bottleneck links between GW and APs/MPs.

To improve service performance for UTs attached to a mesh network such as reduced session blocking and dropping, the impact of corresponding reconfigurations such as attachment to a new AP and routing via alternative MPs are investigated. For throughput calculation both the amount of available resources (link capacity) on potential access and mesh links, and the minimum QoS provided in terms of multiple hops (delay) for different traffic classes are considered. In the following an analytical expression for the average achievable throughput enhancements thanks to combined access/mesh load balancing technique will be derived for a set of simplified reference scenarios. Aim is to obtain an upper estimation of the relative improvement which can be expected by considering both access and mesh capacity. Unlike for community networks, here the case of a wireless operator mesh network is assumed which has a hexagonal cell structure and provides identical link capacity on each mesh link.

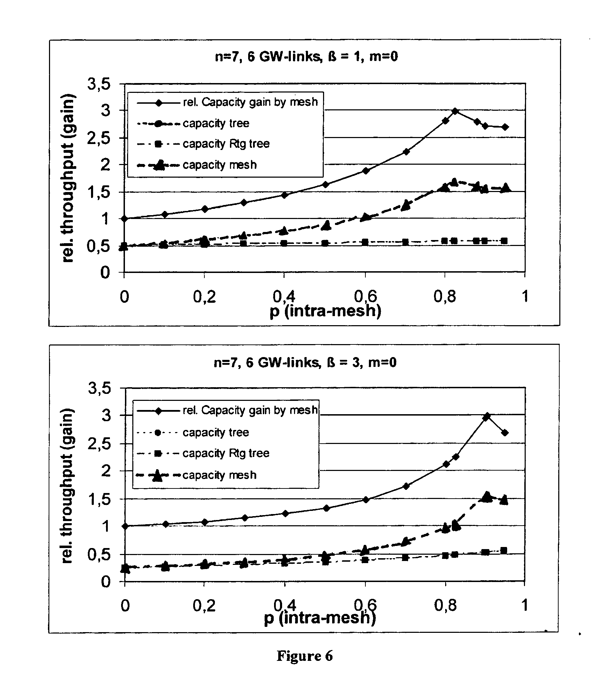

The figures 6-11 analyse and quantify the potential gain in meshed networks by applying methods of load balancing and traffic shaping enabled by re-attachment of end user terminals (UTs) to adjacent cells.

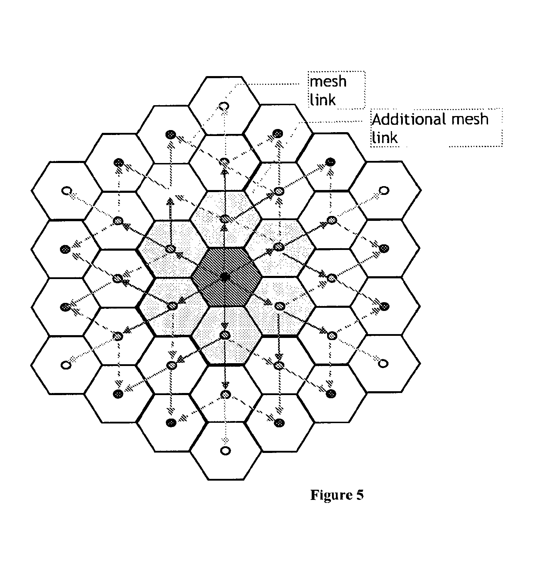

An exemplary idealized network is shown in Fig. 5 denoting a central GW (black) surrounded by several tiers of (grey) APs/MPs. Minimum amount of inter node links are depicted as solid arrows (tree structure) with dashed arrows representing mesh links for minimum mesh configuration, whereas exemplary additional mesh links are denoted by dotted arrows.

The approach to calculate the average AP capacity supported by a reference mesh scenario of $n$ APs per GW assumes a homogeneous user distribution. Each AP (which serves terminals covered by this unit) generates (and receives) the same unit traffic amount equal to 1. The mesh links between therefore MPs exhibit the largest (composite) traffic load as a multiple of 1 will limit the overall mesh capacity or throughput.

It is assumed that the mesh link capacity for all inter-MP links of the same length is uniform and that all APs (with lower cell range) offer a considerably higher capacity for user access. Here it is considered that mesh internal source traffic from the APs and traffic terminated at the APs is equal. For mesh external traffic, the level of symmetry as ratio between downlink (i.e. mesh incoming) and uplink (i.e. mesh outgoing) traffic is defined to be denoted by $\beta$. As a result the total data rate has to be scaled accordingly and some technology specific overhead has to be accounted for.

For the purpose of simplicity it is assumed a concentrically placement of $n$-1 APs with hexagonal cell structure around a GW. Here both the GW as well as all intermediate MPs also serve as APs for user traffic.

It is distinguished between user traffic remaining inside the mesh (i.e. peer-to-peer or intra-mesh traffic aimed at a connection to another AP within the mesh scenario) and traffic which aims at a corresponding node outside the mesh and thus has to be routed via the GW. By denoting the probability of intra-mesh traffic by $p$, the portion of traffic which has to be routed via the GW is 1-$p$ per AP, so $n*(1-p)$ of traffic emerging via the GW interface to the outside world. A traffic volume of $\beta*n*(1-p)$ is received by the GW from outside and has to be forwarded via the mesh internal interfaces. Assuming that on average the intra-mesh portion is equally distributed to all $n$ APs, from each AP 1-$p/n$ of the assumed total traffic emerges via all active mesh links.

It is further assumed that within a tree and mesh structure originally on the average the traffic emerging from $k$ APs is aggregated at a MP and that traffic from *1* APs (amount of APs less than half the total without GW, i.e. $1 \le (n - 1)/2$) could be re-routed via mesh-links in order to reduce burden on the links to the GW. For a hexagonal scenario with one tier of ($n$=6) APs around the GW (each connected by a separate link) one thus obtains $k=(n-1)16=1$, for two tiers already (n = 18) APs are surrounding the GW, so $k=(n-1)/6=3$. The maximum average throughput supported by GW connectivity under tree scenarios is dependent on whether the mesh nodes have a routing functionality or not (in the latter case, here denoted as 'hierar-chical tree', all traffic has to be routed via the GW).

In the modelled hexagonal network structure three different parts contribute to the total traffic per mesh link. Represented by three terms the traffic load $P$ consists of the part emerging from $k$ APs, the part aiming at the $k$ APs which emerge from the GW, and the part emerging from the other $n-k$ APs within the mesh

$$P_{hier} = k - (k+(n-1)/6-1)/n*p + k*\beta*(1-p) + k*(n-k)/n*p$$

$$P_{rout} = k - k*k/n*p + k*\beta*(1-p) + k*(n-k)/n*p$$

$$= k*(1+\beta - \beta*p) - k*(2*k-n)/n*p$$

for hierarchical and routing tree topology, respectively. For a mesh topology assuming that all internal traffic is routed around the loaded GW-link it is obtained

$$P_{mesh,\ GW} = k*(1+\beta - \beta*p) - k*(n-2*k)/n*p + 2*k^2*p/n$$

Here the last term represents traffic from and to most distant APs which would be routed via the GW to reduce hop count and latency. Correspondingly the traffic on the inter-MP links amounts to $2*k^2*p/n$ per branch of $k$ MPs, i.e. in case all $n$-1 MPs' traffic is forwarded around the central GW, half of them (using the 'second shortest' hop amount) contributes to each link - except the exact opposite one (in case of even number of APs within each tier) so that

$$P_{mesh,\ MP} = 2*k^2*p/n \ *(n-2)/2 = k^2*(n-2)*p/n$$

In case the most distant AP is excluded from re-routing the factor $n$-2 reduces to $n$-3.
This load may be assigned in a balanced way to all inter-MP links between adjacent branches or MP sub clusters made out of $k$ APs. This amount is 1 in case of a scenario with minimum amount of inter-MP links but increases to 2 or 3 in case the amount $m$ of additional mesh links per branch is increased to 1 or 2. The overall throughput is determined by the maximum of link loads on GW-link and inter-MP links, $P_{mesh,\ GW}$ and $P_{mesh,\ MP}$, but the minimum with respect to the decision on how to proceed with the most distant AP traffic - thus

$$P_{mesh} = \text{Min } \{\text{Max } [k*(1+\beta - \beta*p) - k*(n-4*k)/n*p;\ k^2*(n-3)*p/n/\ (m+1)];$$
$$\text{Max } [k*(1+\beta - \beta*p) - k*(n-2*k)/n*p;\ k^2*(n-2)*p/n/\ (m+1)] \ \}$$

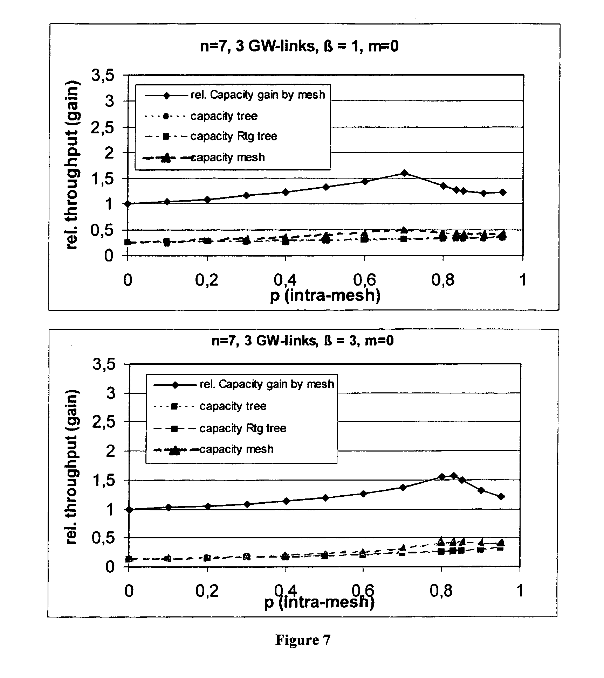

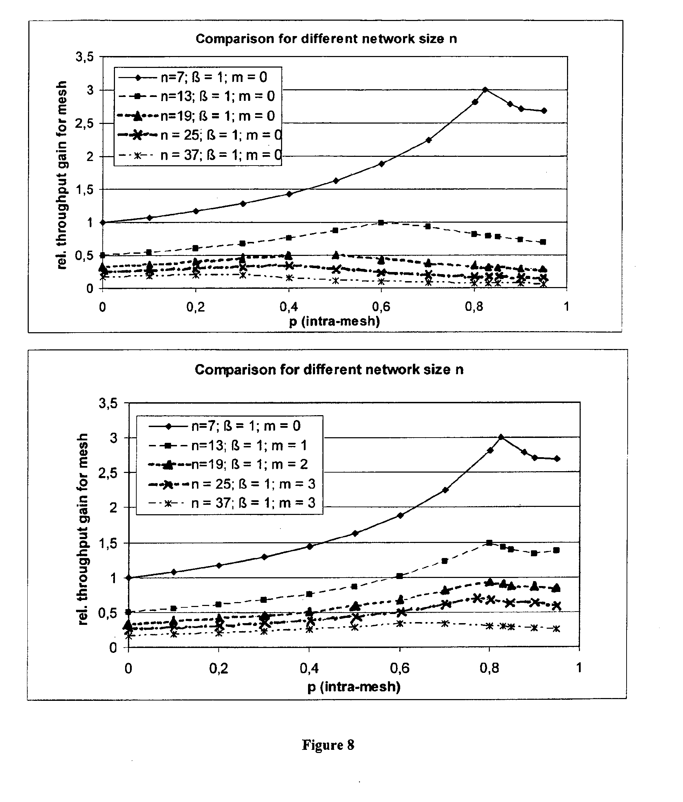

Note that it is assumed in the formulas above that both up- and downlink traffic is considered to share the same medium on the mesh links, but any additional overhead for separating both streams is not accounted for here.
Numerical results of the formulas derived above are given in Figures 6 - 8 where the invention has defined as gain $G$ the relation between throughput in case of mesh and of tree topology

$$G = P_{mesh}\ /\ P_{tree}$$

for different amounts of $n$, $m$, and ß.
As can be seen from the results shown in Figures 6 and 7 for 7 APs the advantage of mesh increases with the amount of internal traffic. However, with a high amount of down-link traffic from external networks denoted by larger ratio ß the throughput gain for mesh topology is less pronounced and reaches the maximum for even higher values of $p$ denoting the percentage of intra-mesh traffic. As can be seen for very large values of p the gain is decreasing again since the links towards the GW are no longer a bottleneck. As expected the performance is degraded for only 3 GW links in Fig. 7 compared to 6 GW links assumed for Fig. 6.
Accordingly in Fig. 8 a comparison of the achievable average throughput for symmetrical traffic is depicted for different amount of APs per GW at a constant amount of 6 GW links. The upper graph shows the capacity without installing additional mesh links between MPs ($m$ = 0) whereas the lower graphs show that by adding up to 3 mesh links an additional capacity increase for high portion of intra-mesh traffic can be achieved.

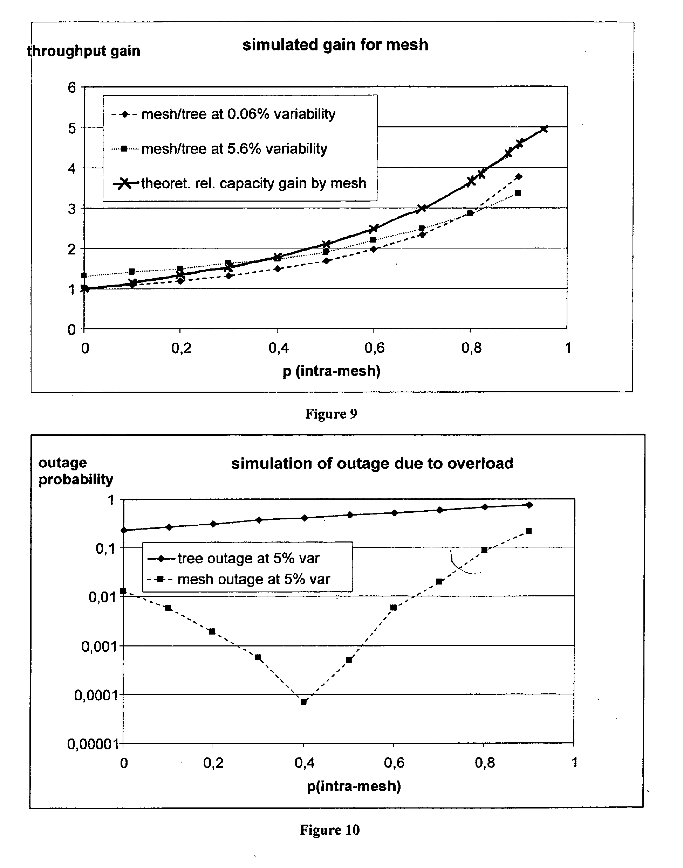

Both for a 7-AP and a 13-AP scenario a traffic variability simulation has been performed where for reasons of simplicity only up-link traffic has been considered (ß=0). A variable traffic demand has been assumed to originate randomly at the APs and both the achieved goodput as well as the occurring outage probability due to traffic overload has been registered for tree and mesh topologies and for different percentage of intra-mesh traffic p. The results shown in Fig. 9 for high (5.6%) and low (0.06%) traffic variability (defined as the ratio between traffic variance and average for each AP) represent the throughput ratio between mesh and tree topology. A comparison with the theoretical values (0% variability) from the formulas above shows a good correlation for low to medium intra-mesh traffic probability and for low variability. For high variability (i.e. very inhomogeneous traffic distribution) the simulated mesh performance exceeds the theoretical values at low probability for intra-mesh traffic since here the gain for a tree topology is worse than in theory, as expected. Deviations for high fraction of intra-mesh traffic result due to the idealistic assumption of perfect reroutability of intra-mesh traffic and the high in-homogeneity causes a worse performance. The simulated outage shown in Fig. 10 on one hand proves the performance increase of mesh vs. tree by revealing an outage probability for mesh of less than 10% of that for tree topology for $p$=0 (which reduces to less than 0.01% for $p$ = 0.4, whereas the outage in case of tree topology steadily increases). Due to the inhomogeneous traffic origination the performance decreases again for high amount of intra-mesh traffic and overload of the inter-AP mesh links.

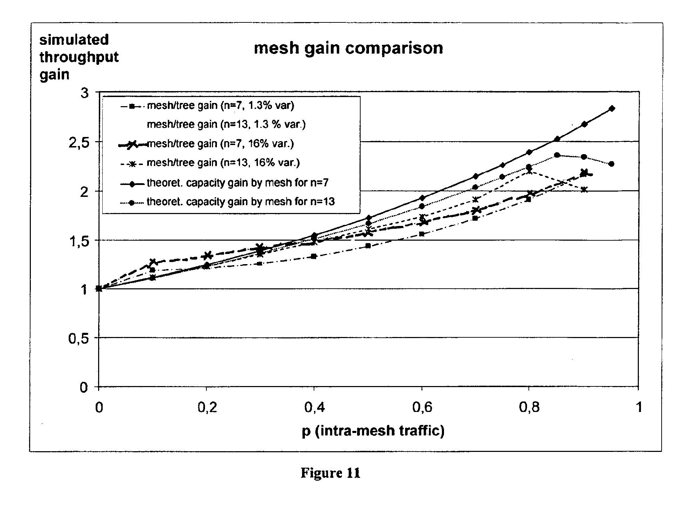

Also a simulative comparison between 1:7 and 1:13 ratio of GWs and APs has been performed. As can be seen from Fig. 11 the theoretical calculation again outperforms the simulation results. The throughput ratio exhibits a relative maximum in the 13-AP scenario when load on 12 mesh- and 6 gateway links is balanced. This cannot be detected in the 7-AP scenario where the amount of both link types is equal.

Both analytical analysis and numerical simulation results for the throughput gain to be achieved within a mesh network topology have been described above. This shall illustrate the impact of traffic parameters such as amount of intra-mesh traffic ($p$) and traffic asymmetry (ß) as well as mesh network topology configurations such as amount of nodes ($n$) and inter-MP links ($m$) on optimum achievable mesh network performance.

## References

[1] Akyildiz, I.F, Wang, X., A Survey on Wireless Mesh Networks, IEEE Radio Communications, (Sept. 2005), S23-S30.

[2] T. H. Szymanski, Throughput and QoS optimization in nonuniform multichannel wireless mesh networks, International Workshop on Modeling Analysis and Simulation of Wireless and Mobile Systems, in: Proceedings of the 4th ACM symposium on QoS and security for wireless and mobile networks, p. 9-19

[3] EU-Projekt CARMEN, http://www.ict-carmen.eu/

[4] MeshDynamics Patented Third Generation Wireless Mesh Technology, http://www.meshdynamics.com/mesh-network-technology.html, accessed on March30, 2010

[5] IEEE P802.11s/D1.08. Draft amendment to standard - IEEE 802.11: ESS Mesh Networking. IEEE, Jan. 2008

[6] IEEE 802.15 WPAN™ Task Group 5 (TG5) Mesh Networking, http://www.ieee802.org/15/pub/TG5.html

[7] IEEE "Air Interface for Fixed and Mobile Broadband Wireless Access Systems - Multihop Relay Specification.", http://standards.ieee.org/getieee802/download/802.16j-2009.pdf

[8] Bayer, N. and von Hugo, D., "Challenges for Wireless Mesh Networks to provide reliable carrier-grade services", submitted to ARS 2010 (Kleinheubacher Berichte 2009)

[9] Method and Device for Routing Mesh Network Traffic, Keith J. Goldberg and Christopher L. Bear, http://www.faqs.org/patents/app/20090028169

[10] B. Claise, Ed., "Specification of the IP Flow Information Export (IPFIX) Protocol for the Exchange of IP Traffic Flow Information", RFC 5101, IETF January 2008

[11] Hejiao Huang and Yun Peng, "Throughput Maximization with Traffic Profile in Wireless Mesh Network", Computing and Combinatorics, LCNS 5092/ COCOON 2008, Springer 2008, pp. 532-540

[12] Ashish Raniwala, Kartik Gopalan, and Tzi-cker Chiueh, "Centralized Channel Assignment and Routing Algorithms for Multi-Channel Wireless Mesh Networks", Mobile Computing and Communications Review, Volume 8, Number 2, pp.50-65

[13] Vinh Dien HOANG, Maode MA, Hiroshi HARADA, "Multi-paths Routing with Load Balancing for Internet Access in Wireless Mesh Networks", IJWMN, Vol.2, Feb. 2010, pp. 55-75

[14] Liang Ma, Mieso K. Denko, "A Routing Metric for Load-Balancing in Wireless Mesh Networks," ainaw, vol. 2, pp.409-414, 21st International Conference on Advanced Information Networking and Applications Workshops (AINAW'07), 2007

[15] Chen Wei-Peng and Su Ching-Fong, Traffic Engineering on Wireless Mesh Networks, Patent Application US 2008/225717 AI ([US] ET AL) 18 September 2008 (2008-09-18)

[16] Chari Amalavoyal, Conversion of Access Nodes to Gateways within a Wireless Mesh Network, Patent Application US 2008/181124 AI ([US]) 1-16, 31 July 2008 (2008-07-31)

## Claims

1. Method to improve a mesh network system, wherein the mesh network comprises $n$ mesh access points APs and at least one gateway GW, each AP has at least one interface to establish at least $m$ mesh-links, wherein
at least one AP or a dedicated central node determines a ratio $\beta$ of traffic outgoing from the mesh network via the GW and incoming traffic to the mesh network via the GW and/or a ratio $p$ of mesh internal traffic to total traffic and depending on pre-defined thresholds for $\beta$ and/or $p$ additional mesh-links $q$ are added $m+q$ or removed $m-q$ between two or more APs, and the traffic is re-routed correspondingly over the mesh-links.

2. The method according to claim 1, wherein the ratio $\beta$ of mesh outgoing and mesh incoming traffic is calculated as the amount of traffic from a data source located inside the mesh which has to be routed via the gateway GW to a destination within an external net relative to the amount of traffic from a data source outside the mesh network which has to be routed via the gateway GW to a destination within the mesh network,
and/or
wherein the ratio $p$ of internal and total traffic is calculated as the amount of mesh-internal traffic where both data source and destination are located within the mesh network relative to the total amount of mesh-internal and -external traffic from inspection of received and forwarded packets.

3. The method according to claim 1, wherein the traffic information in terms of parameters $p$ and $\beta$ is measured centrally and distributed to all nodes within the mesh network to adapt the number of mesh-links.

4. The method according to claim 1, wherein the traffic information in terms of parameters $p$ and $\beta$ is measured locally and distributed to all nodes within the mesh network to adapt the number of mesh-links.

5. The method according to one or more of the preceding claims, wherein the ratio $p$ of mesh internal traffic to total traffic defines the number of mesh-links between the mesh access points, wherein a higher internal traffic leads to a higher number of mesh-links between the mesh access points, and vice versa.

6. The method according to one or more of the preceding claims, wherein the ratio $\beta$ of mesh outgoing and incoming traffic defines the number of mesh-links from the mesh access points to the gateway GW, wherein a higher downlink traffic leads to a higher number of mesh-links from the GW to the AP and vice versa.

7. The method according to one or more of the preceding claims, wherein traffic load balancing methods are used to re-configure a mesh network to achieve an optimum overall network throughput after a change of the mesh-links.

8. The method according to one or more of the preceding claims, wherein the ratio p is stored in the intelligent reconfiguration control logic as a function of $n$, $m$, $\beta$, measuring the ratio between amount of intra-mesh traffic and total traffic, at each AP and transferring this information to a control unit calculating the average figure of $p$ for the mesh network at the central control node from a look-up table, storing the relation between average achievable gain and the parameters then the optimum configuration in terms of additional or less activated mesh links q is derived and a signal to switch on or off these links is sent to all AP.

9. Mesh network system, wherein the mesh network comprises *n* mesh access points, APs, and at least one gateway, GW, each AP has a least one interface to establish at least *m* mesh-links, wherein

at least one AP or a dedicated central node comprise a determination unit to determine a ratio $\beta$ of mesh incoming and outgoing traffic and/or a ratio *p* of mesh internal traffic to external traffic

and depending on pre-defined thresholds for $\beta$ and/or *p* additional mesh-links *q* the APs are able to add *m+q* or remove *m-q* between two or more APs, and to re-route the traffic correspondingly over the mesh-links.

10. Mesh network system, according to claim 9, wherein the ratio $\beta$ of mesh incoming and outgoing traffic is calculated as the amount of traffic from a data source located inside the mesh which has to be routed via the gateway GW to a destination within an external net relative to the amount of traffic from a data source outside the mesh network which has to be routed via the gateway GW to a destination within the mesh network,

and/or

wherein the ratio *p* of mesh internal and total traffic is calculated as the amount of mesh-internal traffic where both data source and destination are located within the mesh network relative to the total amount of mesh-internal and -external traffic from inspection of received and forwarded packets.

11. Mesh network system according to claim 10, wherein the dedicated central node is adapted to measure the traffic information in terms of parameters *p* and *ß* centrally and to distribute the result to all APs within the mesh network to adapt the number of mesh-links.

12. Mesh network system according to claim 10, wherein the traffic information in terms of parameters *p* and *ß* is measured locally and distributed to all APs within the mesh network to adapt the number of mesh-links.

13. Mesh network system according to one or more of the preceding claims 10-12, wherein the ratio of mesh internal traffic to total traffic *p* defines the number of mesh-links between the mesh access points, wherein a higher internal traffic leads to a higher number of mesh-links between the mesh access points, and vice versa.

14. Mesh network system according to one or more of the preceding claims 10-13, wherein the ratio $\beta$ of mesh outgoing and incoming traffic defines the number of mesh-links from the mesh access points to the gateway GW, wherein a higher mesh incoming traffic leads to a higher number of mesh-links from the GW to the AP and vice versa.

15. Mesh network system according to one or more of the preceding claims 10-14, wherein traffic load balancing methods are used to re-configure a mesh network to achieve an optimum overall network throughput after a change of the mesh-links.

16. Mesh network system according to one or more of the preceding claims 10-15, wherein the ratio p is stored in the intelligent reconfiguration control logic of the AP or the central node as a function of *n*, *m*, *ß*, measuring the ratio between amount of intra-mesh traffic and total traffic at each AP and transferring this information to the control unit calculating the average figure of *p* for the mesh network from a look-up table at the central control unit, storing the relation between average achievable gain and the parameters, then the optimum configuration in terms of additional or less activated mesh links *q* is derived, and a signal to switch on or off these links is sent to all APs.

**Patentansprüche**

1. Verfahren zur Verbesserung eines Maschen-Netzwerk-Systems, wobei das Maschennetz *n* Maschenzugangspunkte APs und mindestens ein Gateway GW umfasst, jeder AP weist mindestens eine Schnittstelle auf, um mindestens *m* Maschenverbindung herzustellen, wobei

mindestens ein AP oder ein geeigneter zentraler Knoten ein Verhältnis $\beta$ des vom Maschennetzwerks über den GW ausgehenden Verkehr und des eingehenden Verkehrs zu dem Maschennetz über den GW und/oder einem Verhältnis *p* des mascheninternen Verkehrs zu dem gesamten Verkehr, und in Abhängigkeit von vorgegebenen Schwellenwerten für $\beta$ und/oder *p* werden zwischen zwei oder mehr APs zusätzliche Maschenverbindungen *q* hinzugefügt, *m+q,* oder entfernt, *m-q,* und der Verkehr wird entsprechend über die Maschenverbindungen umgeleitet.

2. Verfahren nach Anspruch 1, wobei das Verhältnis $\beta$ des ausgehenden und eingehenden Maschenverkehrs als die Menge des Verkehrs von einer Datenquelle, die innerhalb einer Masche liegt, die über das Gateway GW zu einem Zielort in einem externen Netz geht, im Verhältnis zu der Menge des Verkehrs von einer Datenquelle außerhalb des Maschen-Netzwerk-Systems, die über das Gateway GW zu einem Ziel innerhalb des Maschen-Netzwerks geleitet wird, berechnet wird, und/oder
wobei das Verhältnis p des internen und des gesamten Verkehrs als die Menge des mascheninternen Verkehrs berechnet wird, wobei sich Datenquelle und Ziele innerhalb des Maschen-Netzwerks befinden, relativ zu der Gesamtmenge des mascheninternen und -externen Verkehrs aus der Untersuchung von empfangenen und weitergeleiteten Pakete befinden.

3. Das Verfahren nach Anspruch 1, wobei die Verkehrsdaten in Bezug auf die Parameter p und ß zentral gemessen und auf alle Knoten in dem Maschennetzwerk verteilt werden, um die Anzahl der Maschenverbindungen anzupassen,

4. Das Verfahren nach Anspruch 1, wobei die Verkehrsdaten in Bezug auf die Parameter p und ß lokal gemessen und auf alle Knoten in dem Maschennetzwerk verteilt werden, um die Anzahl der Maschenverbindungen anzupassen.

5. Das Verfahren nach einem oder mehreren der vorhergehenden Ansprüche, wobei das Verhältnis p des mascheninternen Verkehrs zu dem gesamten Verkehr die Anzahl von Maschenverbindungen zwischen den Maschen-Zugangspunkten bestimmt, wobei ein höherer interner Verkehr zu einer höheren Anzahl von Maschenverbindungen zwischen den Maschenzugangspunkten führt und umgekehrt.

6. Das Verfahren nach einem oder mehreren der vorhergehenden Ansprüche, wobei das Verhältnis $\beta$ des ausgehenden und eingehenden Maschenverkehrs die Anzahl von Maschenverbindungen von den Maschen-Zugangspunkten zu dem Gateway GW bestimmt, wobei ein höherer Download-Verkehr zu einer höheren Anzahl von Maschenverbindungen von dem GW zu dem AP führt und umgekehrt.

7. Das Verfahren nach einem oder mehreren der vorhergehenden Ansprüche, wobei ein Verkehrslastausgleichsverfahren verwendet wird, um ein Maschennetzwerk neu zu konfigurieren, um einen optimalen Gesamtnetzwerkdurchsatz nach einer Änderung der Maschenverbindungen zu erzielen.

8. Das Verfahren nach einem oder mehreren der vorhergehenden Ansprüche, wobei das Verhältnis p in der intelligenten Rekonfigurations-Steuerlogik als eine Funktion in Abhängigkeit von n, m, ß gespeichert wird, die an jedem AP das Verhältnisses zwischen der Menge an internem Maschenverkehr und Gesamtverkehr misst, und Übertragen dieser Informationen an eine Steuereinheit, die die Durchschnittszahl von p für das Maschennetz an dem zentralen Kontrollpunkt aus einer Nachschlagtabelle berechnet, Speichern des Verhältnis zwischen durchschnittlich erreichbarer Verbesserung und den Parameter, dann wird die optimale Konfiguration in Bezug auf zusätzliche oder weniger aktivierte Maschenverbindungen q abgeleitet und ein Signal zum An- oder Ausschalten dieser Verbindung wird an alle AP gesendet.

9. Maschennetzwerksystem, wobei das Maschennetzwerk *n* Maschenzugangspunkte, APs und mindestens einen Gateway GW umfasst, jeder AP weist mindestens eine Schnittstelle auf, um mindestens *m* Maschenverbindungen herzustellen, wobei
mindestens ein AP oder ein geeigneter zentraler Knoten eine Ermittlungseinheit umfassen, um ein Verhältnis von $\beta$ von eingehendem und ausgehenden Maschenverkehr und/oder ein Verhältnis p von mascheninternen zu externem Maschenverkehr zu bestimmen
in Abhängigkeit von vorgegebenen Schwellenwerten für $\beta$ und/oder p sind die APs in der Lage zwischen zwei oder mehr APs zusätzliche Maschenverbindungen *q* hinzuzufügen, *m+q,* oder zu entfernen *m-q,* und um den Verkehr entsprechend über die Maschenverbindungen umzuleiten.

10. Maschennetzwerksystem nach Anspruch 9, wobei das Verhältnis $\beta$ des ausgehenden und eingehenden Maschenverkehrs als die Menge des Verkehrs von einer Datenquelle, die innerhalb einer Masche liegt, die über das Gateway GW zu einem Zielort in einem externen Netz geht, im Verhältnis zu der Menge des Verkehrs von einer Datenquelle außerhalb des Maschen-Netzwerk-Systems, die über das Gateway GW zu einem Ziel innerhalb des Maschen-Netzwerks geleitet wird, berechnet wird,
und/oder
wobei das Verhältnis p des internen und des gesamten Verkehrs als die Menge des mascheninternen Verkehrs berechnet wird, wobei sich Datenquelle und Ziele innerhalb des Maschen-Netzwerks befinden, relativ zu der Gesamtmenge des mascheninternen und -externen Verkehrs aus der Untersuchung von empfangenen und weitergeleiteten Pakete befinden.

**11.** Maschennetzwerksystem nach Anspruch 10, wobei der geeignete zentrale Knoten angepasst ist, um die Verkehrsdaten in Bezug auf die Parameter p und ß zentral zu messen und auf alle Knoten in dem Maschennetzwerk zu verteilt, um die Anzahl der Maschenverbindungen anzupassen.

**12.** Maschennetzwerksystem nach Anspruch 10, wobei die Verkehrsinformationen in Bezug auf die Parameter *p* und ß lokal gemessen und an alle APs innerhalb des Maschennetzwerks verteilt werden, um die Anzahl der Maschenverbindungen anzupassen.

**13.** Maschennetzwerksystem nach einem oder mehreren der vorhergehenden Ansprüche 10-12, wobei das Verhältnis p des mascheninternen Verkehrs zu dem gesamten Verkehr die Anzahl von Maschenverbindungen zwischen den Maschen-Zugangspunkten bestimmt, wobei ein höherer interner Verkehr zu einer höheren Anzahl von Maschenverbindungen zwischen den Maschenzugangspunkten führt und umgekehrt.

**14.** Maschennetzwerksystem nach einem oder mehreren der vorhergehenden Ansprüche 10-13, wobei das Verhältnis β des ausgehenden und eingehenden Maschenverkehrs die Anzahl von Maschenverbindungen von den Maschen-Zugangspunkten zu dem Gateway GW bestimmt, wobei ein höherer Download-Verkehr zu einer höheren Anzahl von Maschenverbindungen von dem GW zu dem AP führt und umgekehrt.

**15.** Maschennetzwerksystem nach einem oder mehreren der vorhergehenden Ansprüche 10-14, wobei ein Verkehrslastausgleichsverfahren verwendet wird, um ein Maschennetzwerk neu zu konfigurieren um einen optimalen Gesamtnetzwerksdurchsatz nach einer Änderung der Maschenverbindungen zu erzielen.

**16.** Maschennetzwerksystem nach einem oder mehreren der vorhergehenden Ansprüche 10-15, wobei das Verhältnis p in der intelligenten Rekonfigurations-Steuerlogik als eine Funktion in Abhängigkeit von n, m, ß gespeichert ist, die an jedem AP das Verhältnisses zwischen der Menge an internem Maschenverkehr und Gesamtverkehr misst, und Übertragen dieser Informationen an eine Steuereinheit, die die Durchschnittszahl von p für das Maschennetz an dem zentralen Kontrollpunkt aus einer Nachschlagtabelle berechnet, Speichern des Verhältnis zwischen durchschnittlich erreichbarer Verbesserung und den Parameter, dann wird die optimale Konfiguration in Bezug auf zusätzliche oder weniger aktivierte Maschenverbindungen q abgeleitet und ein Signal zum An- oder Ausschalten dieser Verbindung wird an alle AP gesendet.

**Revendications**

**1.** Procédé d'amélioration d'un système de réseau maillé, dans lequel le réseau maillé comporte n points d'accès maillés Aps et au moins une passerelle GW, chaque AP ayant au moins une interface pour l'établissement d'au moins m liens maillés, dans lequel
au moins un AP ou un noeud central dédié détermine un rapport β de trafic sortant du réseau maillé via la GW et un trafic entrant verse le réseau maillé via la GW et/ou un rapport p du trafic interne maillé sur le trafic total et dépendant de seuls pré-définis pour β et/ou p liens de maillage additionnels q sont ajoutés m+q ou supprimés m-q entre deux ou plusieurs Aps, et le trafic est rerouté en conséquence sur les liens de maillage.

**2.** Le procédé selon la revendication 1, dans lequel le rapport β de trafic sortant maillé et de trafic entrant maillé est calculé comme étant le niveau de trafic depuis une source de données située à l'intérieur du maillage devant être routé via la passerelle GW vers une destination à l'intérieure d'un réseau extérieur relativement au montant du trafic depuis une source de données à l'extérieur du réseau maillé devant être routé via la passerelle GW vers une destination à l'intérieur du réseau maillé,
et/ou
dans lequel le rapport p de trafic interne et total est calculé à partir du montant du trafic interne maillé dans lequel les deux source et destination de données sont situées à l'intérieur du réseau maillé relativement au montant total de trafic interne maillé et externe maillé de paquets reçus et transmis sous inspection.

**3.** Le procédé selon la revendication 1, dans lequel l'information de trafic relative aux paramètres p et β est mesurée de manière centrale et distribuée à tous les noeuds au sein du réseau maillé pour l'adaptation du nombre de liens de maillage.

**4.** Le procédé selon la revendication 1, dans lequel l'information de trafic relative aux paramètres p et β est mesurée localement et distribuée à tous les noeuds au sein du réseau maillé pour l'adaptation du nombre de liens de maillage.

**5.** Le procédé selon l'une ou plusieurs des revendications précédentes, dans lequel le rapport p de trafic interne maillé par rapport au trafic total définit le nombre de liens de maillage entre les points d'accès maillés, dans lequel un trafic interne plus élevé conduit à un nombre plus élevé de liens de maillage entre les points d'accès mailés, et vice versa.

**6.** Le procédé selon l'une ou plusieurs des revendications précédentes, dans lequel le rapport $\beta$ de trafic sortant maillé et de trafic entrant maillé définit le nombre de liens de maillage depuis les points d'accès maillés vers la passerelle GW, dans lequel un trafic descendant plus élevé conduit à un nombre plus élevé de liens de maillage depuis la GW vers l'AP, et vice versa.

**7.** Le procédé selon l'une ou plusieurs des revendications précédentes, dans lequel des méthodes d'équilibrage de charge de trafic sont employées pour reconfigurer un réseau maillé pour l'obtention d'un débit total optimal du réseau à la suite d'un changement des liens de maillage.

**8.** Le procédé selon l'une ou plusieurs des revendications précédentes, dans lequel le rapport p est stocké dans une logique de commande de reconfiguration intelligente sous la forme d'une fonction de n, m, $\beta$, mesurant le rapport entre le montant de trafic inter-maillage et le trafic total, à chaque AP et transférant cette information à une unité de commande calculant la valeur moyenne de p pour le réseau maillé au noeud de commande central à partir d'une table de correspondance, et stockant la relation entre le gain moyen et les paramètres, suivi de la détermination de la configuration optimale en termes d'activation de liens de maillage additionnels ou supprimés ainsi que l'envoi d'un signal à tous les AP pour rendre opérationnels ou non ces liens.

**9.** Système de réseau maillé, dans lequel le réseau maillé comporte n points d'accès maillés, Aps, et au moins une passerelle, GW, chaque AP ayant au moins une interface pour l'établissement d'au moins m liens de maillage, dans lequel au moins un AP ou un noeud central dédié comporte une unité de détermination pour déterminer un rapport $\beta$ de trafic entrant maillé et de trafic sortant maillé et/ou un rapport p de trafic interne maillé vers le trafic externe et sous la dépendance de seuils pré-définis pour $\beta$ et/ou p liens de maillage additionnels q, les Aps sont capable d'ajouter m+q ou de supprimer m-q entre deux ou plusieurs Aps, et de re-router le trafic correspondant sur les liens de maillage.

**10.** Le système de réseau maillé, selon la revendication 9, dans lequel le rapport $\beta$ de trafic entrant maillé et de trafic sortant maillé est calculé comme étant le niveau de trafic depuis une source de données située à l'intérieur du maillage devant être routé via la passerelle GW vers une destination à l'intérieur d'un réseau extérieur relativement au montant du trafic depuis une source de données à l'extérieur du réseau maillé devant être routé via la passerelle GW vers une destination à l'intérieur du réseau maillé,
et/ou
dans lequel le rapport p de trafic interne et total est calculé à partir du montant du trafic interne maillé dans lequel les deux source et destination de données sont situées à l'intérieur du réseau maillé relativement au montant total de trafic interne maillé et externe maillé de paquets reçus et transmis sous inspection.

**11.** Le système de réseau maillé selon la revendication 10, dans lequel le noeud central dédié est adapté à la mesure centralisée de l'information de trafic relative aux paramètres p et $\beta$ et à la distribution du résultat à tous les noeuds au sein du réseau maillé pour l'adaptation du nombre de liens de maillage.

**12.** Le système de réseau maillé selon la revendication 10, dans lequel l'information de trafic relative aux paramètres p et $\beta$ est mesurée localement et distribuée à tous les noeuds au sein du réseau maillé pour l'adaptation du nombre de liens de maillage.

**13.** Le système de réseau maillé selon l'une ou plusieurs des revendications 10-12, dans lequel le rapport p de trafic interne maillé par rapport au trafic total définit le nombre de liens de maillage entre les points d'accès maillés, dans lequel un trafic interne plus élevé conduit à un nombre plus élevé de liens de maillage entre les points d'accès mailés, et vice versa.

**14.** Le système de réseau maillé selon l'une ou plusieurs des revendications 10 -13, dans lequel le rapport $\beta$ de trafic sortant maillé et de trafic entrant maillé définit le nombre de liens de maillage depuis les points d'accès maillés vers la passerelle GW, dans lequel un trafic entrant plus élevé conduit à un nombre plus élevé de liens de maillage depuis la GW vers l'AP, et vice versa.

**15.** Le système de réseau maillé selon l'une ou plusieurs des revendications 10-14, dans lequel des méthodes d'équilibrage de charge de trafic sont employées pour reconfigurer un réseau maillé pour l'obtention d'un débit total optimal du réseau à la suite d'un changement des liens de maillage.

16. Le système de réseau maillé selon l'une ou plusieurs des revendications 10 -15, dans lequel le rapport p est stocké dans une logique de commande de reconfiguration intelligente sous la forme d'une fonction de n, m, β, mesurant le rapport entre le niveau de trafic inter-maillage et le trafic total à chaque AP et transférant cette information à l'unité de commande calculant la valeur moyenne de p pour le réseau maillé à partir d'une table de correspondance au noeud de commande central, et stockant la relation entre le gain moyen et les paramètres, suivi de la configuration optimale en terme d'activation de liens de maillage additionnels ou supprimés ainsi que l'envoi d'un signal à tous les APs pour rendre opérationnels ou non ces liens.

Figure 1

Figure 2

300 — Radio access interface
301 — Mesh link interface 1
302
303 — Mesh link interface m
400 — Data packet routing and forwarding
401 — Data packet information retrieval
Configuration controller — 404
402
200 — Traffic analysis
Decision logic — 403

Figure 3

| Data packet source information \ Data packet destination information | Inside mesh | Outside mesh |
|---|---|---|
| Inside mesh | Intra-mesh traffic | Extra-mesh traffic uplink |
| Outside mesh | Extra-mesh traffic downlink | Not applicable |

Figure 4

mesh link

Additional mesh link

Figure 5

Figure 6

Figure 7

Figure 8

Figure 9

Figure 10

**mesh gain comparison**

simulated throughput gain vs p (intra-mesh traffic)

Legend:
- mesh/tree gain (n=7, 1.3% var)
- mesh/tree gain (n=13, 1.3 % var.)
- mesh/tree gain (n=7, 16% var.)
- mesh/tree gain (n=13, 16% var.)
- theoret. capacity gain by mesh for n=7
- theoret. capacity gain by mesh for n=13

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008225717 A
- US 2008181124 A
- US 2008181124 A1

### Non-patent literature cited in the description

- **AKYILDIZ, I.F ; WANG, X.** A Survey on Wireless Mesh Networks. *IEEE Radio Communications,* September 2005, S23-S30
- **T. H. SZYMANSKI.** Throughput and QoS optimization in nonuniform multichannel wireless mesh networks, International Workshop on Modeling Analysis and Simulation of Wireless and Mobile Systems. *Proceedings of the 4th ACM symposium on QoS and security for wireless and mobile networks,* 9-19
- *MeshDynamics Patented Third Generation Wireless Mesh Technology,* 30 March 2010, http://www.mesh-dynamics.com/mesh-network-technology.html
- IEEE P802.11s/D1.08. Draft amendment to standard - IEEE 802.11: ESS Mesh Networking. IEEE, January 2008
- *IEEE 802.15 WPAN™ Task Group 5 (TG5) Mesh Networking,* http://www.ieee802.org/15/pub/TG5.html
- Air Interface for Fixed and Mobile Broadband Wireless Access Systems - Multihop Relay Specification. *IEEE, http://standards.ieee.org/getieee802/download/802.16j-2009.pdf*
- **BAYER, N. ; VON HUGO, D.** Challenges for Wireless Mesh Networks to provide reliable carrier-grade services. *ARS 2010,* 2009
- **KEITH J. GOLDBERG ; CHRISTOPHER L. BEAR.** *Method and Device for Routing Mesh Network Traffic, http://www.faqs.org/patents/app/20090028169*
- Specification of the IP Flow Information Export (IPFIX) Protocol for the Exchange of IP Traffic Flow Information. RFC 5101. January 2008
- Throughput Maximization with Traffic Profile in Wireless Mesh Network. **HEJIAO HUANG ; YUN PENG.** Computing and Combinatorics, LCNS 5092/ COCOON 2008. Springer, 2008, 532-540
- **ASHISH RANIWALA ; KARTIK GOPALAN ; TZI-CKER CHIUEH.** Centralized Channel Assignment and Routing Algorithms for Multi-Channel Wireless Mesh Networks. *Mobile Computing and Communications Review,* vol. 8 (2), 50-65
- **VINH DIEN HOANG ; MAODE MA ; HIROSHI HARADA.** Multi-paths Routing with Load Balancing for Internet Access in Wireless Mesh Networks. *IJWMN,* February 2010, vol. 2, 55-75
- **LIANG MA ; MIESO K. DENKO.** A Routing Metric for Load-Balancing in Wireless Mesh Networks. *21st International Conference on Advanced Information Networking and Applications Workshops (AINAW'07),* 2007, vol. 2, 409-414